# EUROPEAN PATENT SPECIFICATION

(11) **EP 1 722 569 B1**
(45) Date of publication and mention of the grant of the patent: **31.10.2012**
(21) Application number: 05010527.9
(22) Date of filing: 13.05.2005
(51) Int. Cl.: H04N 7/20

(54) **Method of automatically selecting a satellite to lock onto**
Verfahren zur automatischen Auswahl eines Satelliten zur Verriegelung darauf
Méthode de sélection automatique d'un satellite sur lequel on se verouille

(43) Date of publication of application: 15.11.2006
(73) Proprietor: CyberLink Corp., Hsin-Tien City, Taipei Hsien (TW)
(72) Inventor: Hsu, Chiao-Fang, Jhonghe City, Taipei County (TW)
(74) Representative: Weber, Joachim

(56) References cited:
- WO-A-97/26762
- WO-A-03/073749

## Description

The present invention relates to a method of automatically selecting a satellite to lock onto for receiving satellite television according to the pre-characterizing clause of claim 1.

Satellite television (TV) subscription is becoming increasingly popular. This has given rise to people watching satellite TV on their computers. When watching satellite TV on a computer, the user must first enter the correct satellite parameters into his computer.

WO 03/073749 A1 discloses a method and system for identifying the delivery system and physical properties of the satellite delivery system. A Delivery System Descriptor is used as a descriptor and the DSID is referred to in a Network Information Table (NIT). The DSID identifies the type of the delivery system (Satellite, Cable, Terrestrial), a band the satellite is transmitting and the position in which the satellite appears on the sky. The NIT is contained in the Service Information (SI). The receiver can automatically modify itself for a reception with different parameters. Also, the user can configure the receiver device for the reception with other parameters than currently applied.

Further, WO 97/26762 A1 discloses a printed circuit board intended to be placed within a card slot of a personal computer that allows the personal computer to receive information directly from a satellite communication network. An adapter card operates in slave mode to a CPU of the personal computer. The CPU received demodulated signals from a demodulator of the adapter card via a bus interface on the adapter card. The CPU also receives status information for the demodulator and a tuner and controls the operations of the demodulator and tuner via the bus interface. A DC-DC converter receives power from a power supply for the adapter card circuitry. Moreover, the DC-DC converter powers a low noise block of an antenna of the satellite communication network.

However, the average user is not usually able to perform this setup process by himself because of the large number of parameters that must be setup. For example, the user must first decide which satellite his satellite dish 12 is pointing at. Once the correct satellite has been selected, the user must then key in the reception parameters for each transponder in the selected satellite along with other reception parameters such as downlink frequency, symbol rate, etc. Most users are not able to perform these tasks by themselves.

This in mind, the present invention aims at providing a way to automatically setup satellite TV reception on a computer to solve this problem.

This is achieved by a method of selecting a satellite to lock onto for receiving signals from the satellite according to claim 1. The dependent claims pertain to corresponding further developments and improvements.

As will be seen more clearly from the detailed description following below, the claimed method automatically selects a satellite with the strongest signal for the user. Moreover, the reception parameters needed for communicating with the selected satellite are automatically read from a database, eliminating the need for a user to manually enter the reception parameters. In this way, the claimed method simplifies the task of setting up a satellite TV system.

In the following, the invention is further illustrated by way of example, taking reference to the accompanying drawings. Thereof
Fig.1 is a diagram of a satellite TV system according to the prior art;
Fig.2 is a diagram of a system for watching satellite TV on a computer according to the prior art;
Fig.3 illustrates a system for watching satellite TV using a TV tuner card according to the present invention; and
Fig.4 is a diagram showing the position of a satellite above Earth.

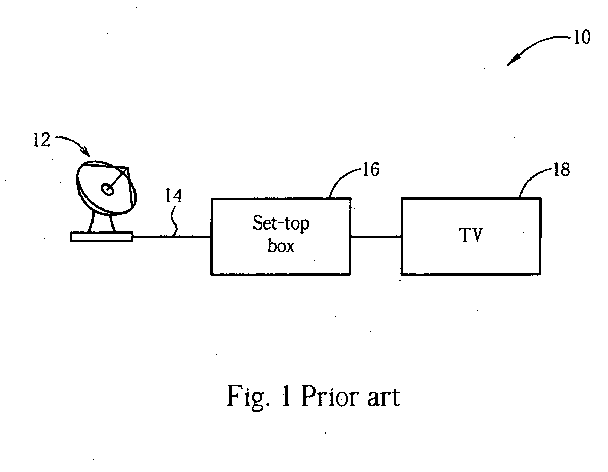

Traditionally, when a user subscribes to a satellite television (TV) service, a technician will come over to the user's house to install a satellite dish and a set-top box. Please refer to Fig.1. Fig.1 is a diagram of a satellite TV system 10 according to the prior art. In the satellite TV system 10, a satellite dish 12 is connected to a set-top box 16 through a cable 14. A TV 18 is connected to the set-top box 16 so that the user can view satellite TV programs through the TV 18. The technician installs the satellite dish 12 and positions it so that the satellite dish 12 is able to receive satellite signals from a satellite orbiting the Earth. In addition, the technician configures the set-top box 16 to have the proper reception parameters for receiving signals from each transponder of the selected satellite. In this satellite TV system 10, the user does not need to go through any complicated setup steps because the technician is the person responsible for setup.

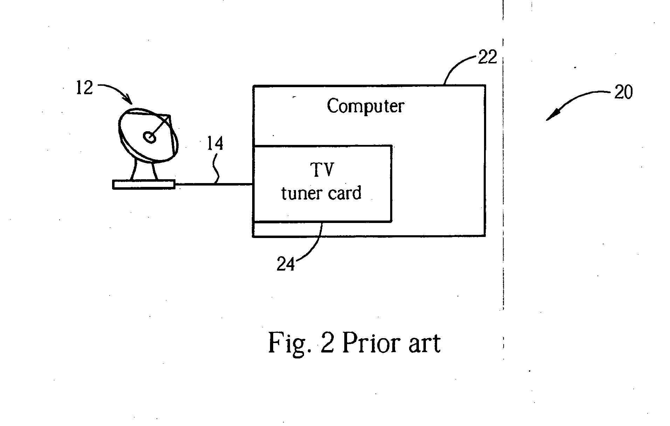

Some users prefer to watch satellite TV on their computer instead of on a TV. Please refer to Fig.2. Fig.2 is a diagram of a system 20 for watching satellite TV on a computer 22 according to the prior art. In the system 20, the computer 22 contains a TV tuner card 24, and the cable 14 is directly connected to the TV tuner card 24 for allowing satellite TV to be received on the computer 22. Presently, when the user buys the TV tuner card 24 for the computer 22 in order to receive satellite TV signals, the satellite reception parameters for the computer 22 must be setup manually. Unfortunately, the average user is not usually able to perform this setup process by himself because of the large number of parameters that must be setup. For example, the user must first decide which satellite his satellite dish 12 is pointing at. This in itself is not an easy task since there are over 180 satellites orbiting the Earth above the equator. Once the correct satellite has been selected, the user must then key in the reception parameters for each transponder in the selected satellite along with other reception parameters such as downlink frequency, symbol rate, etc. Clearly, a simpler setup routine is needed in which the user can buy a TV tuner card, install it in his computer, and quickly and easily configure the computer to start receiving satellite TV signals.

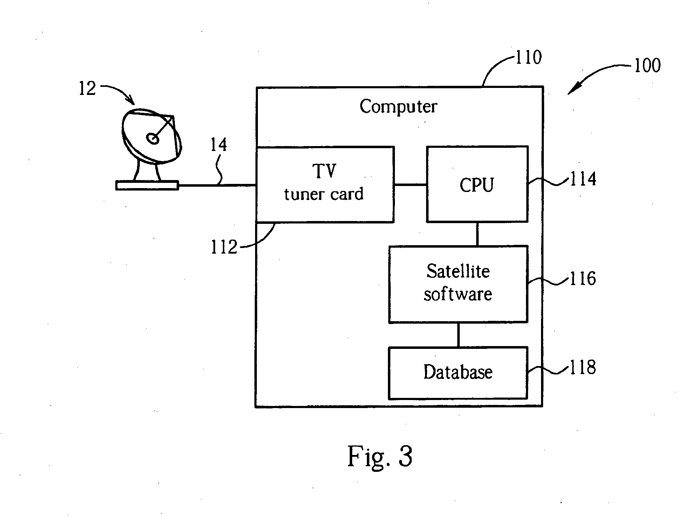

Please refer to Fig.3. Fig.3 illustrates a system 100 for watching satellite TV using a TV tuner card 112 according to the present invention. Like the system 20 shown in Fig.2, the TV tuner card 112 is installed in a computer 110, and receives signals from the satellite dish 12 via the cable 14. When a user installs the TV tuner card 112 in the computer 110, the user also installs a satellite software program 116 to help configure the TV tuner card 112 to receive satellite signals.

The satellite software program 116 also installs a database 118 in the computer 110, the database 118 containing a list of satellites orbiting above the Earth and satellite reception parameters corresponding to the transponder of each satellite in the list of satellites. Some of the parameters required for receiving satellite signals include downlink frequency, symbol rate, forward error correction (FEC), and polarization. The database 118 stores parameters needed for receiving signals from each transponder of each satellite used for broadcasting satellite TV. The database 118 is initially loaded into the computer 110 when the satellite software program 116 is installed, and can be updated in the future by loading or downloading the new parameters into the computer 110. A central processing unit (CPU) 114 controls operation of the computer 110, executes the satellite software program 116, and facilitates communication between the TV tuner card 112 and the satellite software program 116, thereby enabling the computer 110 to be used to watch satellite TV programming.

The present invention solves the prior art problem of forcing the user to manually select a satellite to receive signals from and to enter the reception parameters corresponding to the selected satellite. The present invention uses a multiple step process for automatically selecting a satellite and configuring the computer 110 to watch satellite TV.

First of all, a filtering process can be optionally performed for narrowing down the satellites to be searched. Since there are more than 180 satellites orbiting above the earth, reducing the number of satellites that are searched will save considerable time instead of measuring the signal strength of every single satellite.

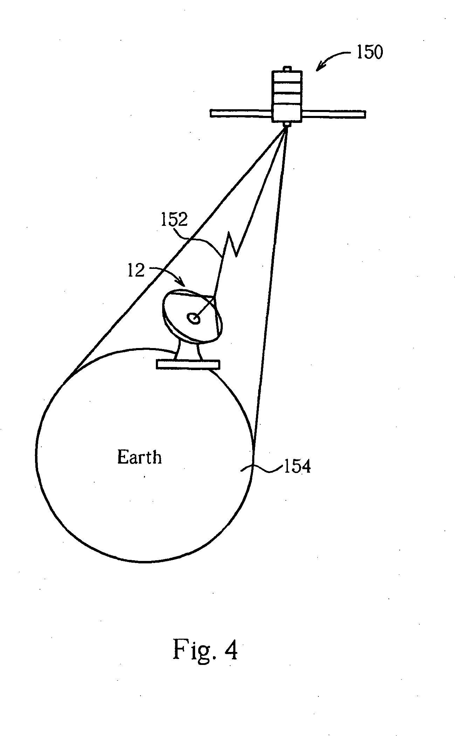

Please refer to Fig.4. Fig.4 is a diagram showing the position of a satellite 150 above Earth 154. The satellite 150 has a coverage angle of about 120 degrees with respect to the Earth 154, meaning that the satellite 150 is theoretically capable of providing satellite signals to about one-third of the Earth 154. Therefore, the satellite dish 12 shown can only receive satellite signals 152 from about 60 satellites, which is one-third of the total 180 satellites above the Earth 154. By comparing the user's geographical location to the information stored in the database 118 that indicates the geographical location of the satellites orbiting the Earth 154, the number of satellites to be searched can be narrowed down to about one-third of the total number. The user's geographical location is most easily extracted from location information present in the computer 110. For instance, when initially setting up the operating system of the computer 110, the user enters time zone information, the country that the user resides in, telephone area code information, etc. The satellite software program 116 can automatically determine the user's geographical location from this data without any further input needed from the user. On the other hand, when installing the satellite software program 116, the satellite software program 116 can also prompt the user to enter his geographical location, and use this location for filtering down the number of satellites to be searched. Although this filtering step is optional, being able to reduce the number of satellites searched will greatly reduce the amount of time needed to successfully select a satellite and configure the computer 110 to receive satellite TV signals from the selected satellite.

The next step in the process is testing the received signal strength of the satellites one satellite at a time. To do this, the system 100 attempts to lock onto as many transponders of each satellite as possible. The reception parameters, which are stored in the database 118, corresponding to the various satellite transponders are loaded one at a time for configuring the system 100 to communicate with satellite transponders. Then this configuration setting is used to attempt to communicate with the corresponding transponder of the satellite. Once the system 100 has successfully communicated with a satellite's transponder, the system 100 can then select this satellite to lock onto.

However, there may be transponders on other satellites that the system 100 is able to communicate with. For best results, it is necessary to try communicating with each available satellite. Therefore, the present invention aims to select the satellite that provides the best reception to the system 100. Each time a transponder is locked onto for a given satellite, a total number of locked transponders corresponding to that satellite is incremented. A total number of locked transponders is calculated for each satellite to determine which satellite provides the best signal strength to the system 100.

A satellite with the strongest signal strength is then chosen to be the satellite that the system 100 will be setup to receive signals from. The chosen satellite can either be the satellite with the highest number of locked transponders, or the satellite having the highest percentage of locked transponders out of all the transponders available on that satellite. In either case, the data indicating the total number of locked transponders should make it very clear which satellite will provide the best signal reception. Once the best satellite has been chosen, the user can then begin watching TV programs broadcast from the chosen satellite.

In contrast to the prior art, the claimed invention automatically selects the satellite which provides the best signal reception, and configures the user's computer with the proper parameters for receiving signals from the selected satellite. In this way, the user does not need to manually select the satellite or manually input the reception parameters. By selecting the satellite which provides the most locked transponders, the present invention method provides a reliable way to select the best satellite available while at the same time minimizing the amount of work required by the user.

## Claims

1. A method of selecting a satellite (150) from a plurality of satellites to lock onto for receiving signals from the satellite (150), wherein each satellite (150) has at least one transponder, the method comprises:
providing a database (118) recorded with a list of the plurality of satellites (150), and a plurality of reception parameters corresponding to the transponders of each satellite (150) in the list of satellites (150);
utilizing the reception parameters corresponding to the transponders of the satellites (150) as a respective configuration setting;
**characterized by**
detecting if the respective configuration setting is capable of receiving signals transmitted from the corresponding transponder of the corresponding satellite (150); and
selecting a detected satellite (150) to lock onto according to the respective configuration setting,
wherein the step of utilizing the reception parameters corresponding to the transponders of the satellites (150) as a respective configuration setting further comprises filtering the list of satellites (150) according to the location of the satellites (150) for selecting a set of satellites (150) closest to the location of a satellite dish (12) used to lock onto the satellites (150).

2. The method of claim 1, **characterized in that** the step of utilizing the reception parameters corresponding to the transponders of the satellites (150) as a respective configuration setting further comprises filtering the list of satellites (150) according to the location of the satellites (150) for selecting only satellites (150) for which a satellite dish (12) used to lock onto the satellites (150) is in the coverage range of the selected satellite (150).

3. The method of claim 1, **characterized in that** in the detecting step, if more than one satellite (150) is detected, the method further comprises locking onto the satellite (150) containing the highest number of detected transponders.

4. The method of claim 3, **characterized in that** locking onto the satellite (150) containing the highest number of locked transponders comprises locking onto the satellite (150) containing the highest percentage of locked transponders.

5. The method of anyone of claims 1 to 2, **characterized in that** in the selecting step, the method further comprises:
accumulating the number of detected transponders of each satellite (150); and
selecting the satellite (150) containing the highest percentage of locked transponders.

6. The method of claim 5, **characterized in that** accumulating the number of detected transponders of each satellite (150) comprises attempting to communicate with the satellites (150) one satellite (150) at a time.

## Patentansprüche

1. Verfahren zum Auswählen eines Satelliten (150) aus einer Mehrzahl von aufschaltbaren Satelliten zum Empfangen von Signalen vom Satellit (150), wobei jeder Satellit (150) zumindest einen Transponder aufweist, wobei das Verfahren umfasst:
Bereitstellen einer Datenbank (118), auf der eine Liste der Mehrzahl der Satelliten (150) und eine Mehrzahl von Empfangsparametern aufgezeichnet ist, die den Transpondern jedes Satelliten (150) in der Liste der Satelliten (150) entsprechen;
Verwenden der den Transpondern der Satelliten (150) entsprechenden Empfangsparameter als jeweilige Konfigurationseinstellung;
**gekennzeichnet durch**
Erfassen, ob die jeweilige Konfigurationseinstellung die vom entsprechenden Transponder des entsprechenden Satelliten (150) gesendeten Signale empfangen kann; und
Auswählen eines erfassten aufschaltbaren Satellit gemäß der jeweiligen Konfigurationseinstellung,
wobei der Schritt des Verwendens der Empfangsparameter, die den Transpondern der Satelliten (150) als jeweilige Konfigurationseinstellung entsprechen, ferner das Filtern der Liste der Satelliten (150) gemäß dem Standort der Satelliten (150) umfasst, um einen Satz von Satelliten (150) auszuwählen, der dem Standort einer Satellitenschüssel (12) am nächsten liegt, die zum Aufschalten auf die Satelliten (150) verwendet wird.

2. Verfahren nach Anspruch 1, **dadurch gekennzeichnet, dass** der Schritt des Verwendens der den Transpondern der Satelliten (150) entsprechenden Empfangsparameter als jeweilige Konfigurationseinstellung ferner das Filtern der Liste der Satelliten (150) gemäß dem Standort der Satelliten (150) umfasst, um nur die Satelliten (150) auszuwählen, für die eine zum Aufschalten auf die Satelliten verwendete Satellitenschüssel (12) im Erfassungsbereich des ausgewählten Satelliten (150) liegt.

3. Verfahren nach Anspruch 1, **dadurch gekennzeichnet, dass** im Erfassungsschritt, falls mehr als ein Satellit (150) erfasst wird, das Verfahren ferner das Aufschalten auf den Satellit (150) umfasst, der die höchste Anzahl von erfassten Transpondern enthält.

4. Verfahren nach Anspruch 3, **dadurch gekennzeichnet, dass** das Aufschalten auf den Satellit (150), der die höchste Anzahl von aufgeschalteten Transpondern enthält, das Aufschalten auf den Satellit (150) umfasst, der den höchsten Prozentsatz an aufgeschalteten Transpondern enthält.

5. Verfahren nach Anspruch 1 oder 2, **dadurch gekennzeichnet, dass** das Verfahren im Schritt des Auswählens ferner umfasst:
Ansammeln der Anzahl von erfassten Transpondern jedes Satellit (150); und
Auswählen des Satelliten (150), der den höchsten Prozentsatz von aufgeschalteten Transpondern enthält.

6. Verfahren nach Anspruch 5, **dadurch gekennzeichnet, dass** das Ansammeln der Anzahl von erfassten Transpondern jedes Satelliten (150) das Versuchen einer Kommunikation mit einem Satelliten (150) nach dem anderen aus den Satelliten (150) umfasst.

## Revendications

1. Procédé pour sélectionner un satellite (150) parmi une pluralité de satellites afin de verrouiller pour recevoir des signaux depuis le satellite (150), dans lequel chaque satellite (150) a au moins un transpondeur, lequel procédé comprend les opérations consistant à :
disposer d'une base de données (118) dans laquelle sont enregistrées une liste de la pluralité de satellites (150) et une pluralité de paramètres de réception correspondant aux transpondeurs de chaque satellite (150) dans la liste de satellites (150) ;
utiliser les paramètres de réception correspondant aux transpondeurs des satellites (150) en tant que réglage de configuration respectif ;
**caractérisé par** les opérations consistant à :
détecter si le réglage de configuration respectif est capable de recevoir des signaux émis par le transpondeur correspondant du satellite correspondant (150) ; et
sélectionner un satellite détecté (150) pour s'y verrouiller en fonction du réglage de configuration respectif,
dans lequel l'étape consistant à utiliser les paramètres de réception correspondant aux transpondeurs des satellites (150) en tant que réglage de configuration respectif comprend en outre l'opération consistant à filtrer la liste de satellites (150) en fonction de l'emplacement des satellites (150) pour sélectionner un ensemble de satellites (150) les plus proches de l'emplacement d'une antenne parabolique (12) utilisée pour se verrouiller sur les satellites (150).

2. Procédé selon la revendication 1, **caractérisé en ce que** l'étape consistant à utiliser les paramètres de réception correspondant aux transpondeurs des satellites (150) en tant que réglage de configuration respectif comprend en outre l'opération consistant à filtrer la liste de satellites (150) en fonction de l'emplacement des satellites (150) pour sélectionner uniquement les satellites (150) pour lesquels une antenne parabolique (12) utilisée pour se verrouiller sur les satellites (150) se trouve dans la plage de couverture du satellite sélectionné (150).

3. Procédé selon la revendication 1, **caractérisé en ce que**, dans l'étape de détection, si plusieurs satellites (150) sont détectés, le procédé comprend en outre l'opération consistant à se verrouiller sur le satellite (150) contenant le plus grand nombre de transpondeurs détectés.

4. Procédé selon la revendication 3, **caractérisé en ce que** le verrouillage sur le satellite (150) contenant le plus grand nombre de transpondeurs verrouillés comprend l'opération consistant à se verrouiller sur le satellite (150) contenant le plus fort pourcentage de transpondeurs verrouillés.

5. Procédé selon l'une quelconque des revendications 1 et 2, **caractérisé en ce que**, dans l'étape de sélection, le procédé comprend en outre les opérations consistant à :
accumuler le nombre de transpondeurs détectés de chaque satellite (150) ; et
sélectionner le satellite (150) contenant le plus fort pourcentage de transpondeurs verrouillés.

6. Procédé selon la revendication 5, **caractérisé en ce que** l'accumulation du nombre de transpondeurs détectés de chaque satellite (150) comprend l'opération consistant à tenter de communiquer avec les satellites (150), un satellite (150) à la fois.
